# EUROPÄISCHE PATENTSCHRIFT

(11) **EP 3 331 319 B1**
(45) Veröffentlichungstag und Bekanntmachung des Hinweises auf die Patenterteilung: **24.06.2020**
(21) Anmeldenummer: 17204459.6
(22) Anmeldetag: 29.11.2017
(51) Int. Cl.: H05B 3/74, A47J 37/06

(54) **KOCHGERÄT MIT EINER KOCHPLATTE UND EINER HEIZEINRICHTUNG DARUNTER**
COOKING APPLIANCE WITH A COOKING PLATE AND A HEATER BENEATH SAME
APPAREIL DE CUISSON DOTÉ D'UNE PLAQUE DE CUISSON ET D'UN DISPOSITIF DE CHAUFFAGE CORRESPONDANT

(30) Priorität: 02.12.2016 DE 102016224069
(43) Veröffentlichungstag der Anmeldung: 06.06.2018
(73) Patentinhaber: E.G.O. Elektro-Gerätebau GmbH, 75038 Oberderdingen (DE)
(72) Erfinder: Block, Volker, 75015 Bretten (DE); Mandl, Matthias, 75015 Bretten (DE); Roth, Martin, 76703 Kraichtal (DE); Tafferner, Michael, 76316 Malsch (DE)
(74) Vertreter: Patentanwälte Ruff, Wilhelm, Beier, Dauster & Partner mbB

(56) Entgegenhaltungen:
- EP-B1- 0 873 669
- WO-A1-02/078397
- DE-A1- 3 810 586
- US-A- 2 010 768
- US-A- 2 640 906

## Beschreibung

Die Erfindung betrifft ein Kochgerät mit einer Kochplatte und einer Heizeinrichtung darunter, wobei insbesondere das Kochgerät mit der Kochplatte dazu verwendet werden soll, Nahrungsmittel direkt darauf zuzubereiten. So können beispielsweise Pfannkuchen oder Crêpes darauf zubereitet werden, alternativ auch Fladen aus Teig. Es kann auch mit sehr hohen Temperaturen darauf gegrillt werden.

Aus dem Stand der Technik ist es beispielsweise bekannt, Kochgeräte mit einer Kochplatte aus Glaskeramik und einer Strahlungsheizeinrichtung darunter auszubilden, so dass ein aufgesetzter Topf odgl. damit beheizt werden kann. Des Weiteren sind sogenannte Warmhalteplatten bekannt, mit denen aufgestellte Töpfe odgl. mit Nahrungsmitteln darin warmgehalten werden können.

Aus der EP 873669 B1 ist ein Kochgerät bekannt, das plattenförmig ausgebildet ist und auf einer Arbeitsfläche betrieben werden kann. Das Kochgerät weist auf beiden Seiten eine Abdichtung aus Glaskeramik auf. Im Inneren befindet sich eine isolierende Platte, die Heizdrähte oder Heizspulen trägt. Die Platte als Träger soll ausreichend stabil ausgebildet sein, so dass sie auf ihren beiden Seiten die Heizdrähte oder Heizspulen tragen kann.

### Aufgabe und Lösung

Der Erfindung liegt die Aufgabe zugrunde, ein eingangs genanntes Kochgerät zu schaffen, mit dem Probleme des Standes der Technik gelöst werden können und es insbesondere möglich ist, ein Kochgerät mit einer Kochplatte und einer vorzugsweise flächigen bzw. flachen Heizeinrichtung darunter praxistauglich und kostengünstig aufzubauen.

Gelöst wird diese Aufgabe durch ein Kochgerät mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Das Kochgerät weist eine Kochplatte auf, die vorteilhaft flach bzw. flächig ausgebildet ist, und eine Heizeinrichtung darunter. Die Kochplatte soll zur direkten Zubereitung von Nahrungsmitteln darauf ausgebildet sein bzw. geeignet sein wie zuvor erläutert. Die Heizeinrichtung verläuft parallel zur Kochplatte bzw. verläuft in einer Ebene parallel zur Kochplatte, wobei sie vorteilhaft an der Unterseite der Kochplatte zumindest teilweise anliegt. Besonders vorteilhaft liegt sie vollflächig an der Unterseite der Kochplatte an, wodurch eine möglichst gute Wärmeübertragung erreicht werden kann. Die Heizeinrichtung weist eine parallel zu der Kochplatte verlaufende flache Trägerscheibe auf, die der Heizeinrichtung ihre wesentliche mechanische Stabilität verleihen kann.

Erfindungsgemäß sind an einer Unterseite und an einer Oberseite der Trägerscheibe jeweils Heizmittel angeordnet. Auf beiden Seiten können die Heizmittel die Trägerscheibe jeweils im Wesentlichen bedecken oder überdecken. Vorzugsweise bedecken die Heizmittel dabei nicht vollständig jeden noch so kleinen Flächenbereich, aber sie sollten den Flächenbereich im Wesentlichen mit möglichst kleinen bzw. geringen Lücken überdecken. Beide Heizmittel weisen dabei jeweils mindestens einen Heizleiter auf, bevorzugt viele Heizleiter. Vorteilhaft kann ein Aufbau der Heizmittel auf beiden Seiten der Trägerscheibe gleichartig ausgebildet sein, insbesondere mit gleichartigem Verlauf und/oder gleichartigem Aufbau.

Durch die beidseitig mit Heizmitteln versehene Trägerscheibe kann eine hohe gesamte Heizleistung erreicht werden. Des Weiteren können die Heizleiter auf beiden Seiten der Trägerscheibe so ausgebildet sein, dass durch einen Heizleiter auf einer Seite der Trägerscheibe eine Lücke oder ein freier Bereich auf der anderen Seite der Trägerscheibe bedeckt wird. Ein weiterer Vorteil liegt darin, dass durch die beidseitige Erwärmung der Trägerscheibe Verformungen durch wärmebedingte Materialausdehnung reduziert oder sogar ganz vermieden werden können. Dies verringert den Aufwand für einen stabilen Aufbau des Kochgeräts sowie mögliche mechanische Belastungen für Heizeinrichtung und/oder Kochplatte ebenso wie Verschlechterungen bei Wärmeübertragung durch variierende Abstände zwischen Heizeinrichtung und der Kochplatte bzw. deren Unterseite.

In Ausgestaltung der Erfindung besteht die Kochplatte aus einem elektrisch isolierendem Werkstoff, vorzugsweise aus der Gruppe: Hartglas, Glaskeramik, Keramik, Naturstein. Sie besteht bevorzugt also aus einem mechanisch sehr stabilen sowie dauerhaft ebenen Material. Gerade auch für die direkte Zubereitung von Nahrungsmitteln auf der Kochplatte eignen sich diese Materialien, die anders als Metall korrosionsfrei sind und bei verständiger Verwendung nicht verkratzt werden.

Bevorzugt weist das Kochgerät nur eine einzige Kochplatte und/oder nur eine einzige Heizeinrichtung auf, besonders bevorzugt eine einzige Heizeinrichtung unter einer einzigen Kochplatte. Dadurch kann ein Kochgerät einfach aufgebaut werden und benötigt wenig Platz, beispielsweise deutlich weniger Platz als ein übliches Kochfeld mit mehreren Kochstellen.

Bei der Erfindung besteht die Trägerscheibe aus Mikanit, welches auch in Abmessungen von 20 cm bis 50 cm oder noch größer hergestellt werden kann. Eine Dicke der Trägerscheibe kann relativ gering sein und maximal wenige Millimeter betragen, beispielsweise 0,5 mm bis 2 mm oder 3 mm.

Trägerscheiben aus elektrisch isolierendem Material wie beispielsweise Mikanit weisen den Vorteil auf, dass sie keine separate vorgenannte elektrische Isolierung oder Isolierschicht aufweisen müssen. Auf diesen erfolgt das Aufbringen der Heizmittel erfindungsgemäß in einem Dickschichtverfahren. Bei einem Material wie Mikanit kann auch eine Oberflächenbeschichtung vorgenommen werden, um eine glatte und/oder geschlossene Oberfläche zu bilden, auf die dann wiederum sehr gut die Heizmittel aufgebracht werden können. Alternativ kann bei Herstellung der Trägerscheibe aus Mikanit ein Zusatz beigegeben werden, der eine derartige glatte bzw. geschlossene Oberfläche ergibt.

Gerade für direkt auf die Trägerscheibe aufgebrachte Heizmittel in Form von Dickschichtheizleitern können Anschlussleiter auf die Trägerscheibe aufgebracht sein, die aus sehr gut elektrisch leitfähigem Leitermaterial bestehen. Derartiges sehr gut elektrisch leitfähiges Leitermaterial wird normalerweise zum Bilden von Leiterbahnen oder Zuleitungen auf entsprechenden Trägern verwendet. Die Heizmittel sind mit Anschlussleitern oder entsprechenden Leiterbahnen verbunden bzw. kontaktieren diese. Insbesondere an ihren beiden durch eine Stromflussrichtung durch die Heizmittel bzw. einen Heizleiter bestimmten gegenüberliegenden Enden kontaktieren die Heizleiter die Anschlussleiter oder Leiterbahnen bzw. überlappen diese oder liegen auf diesen auf, insbesondere an Anschlussfeldern. Vorteilhaft ist also pro Seite der Trägerscheibe ein Anschlussleiter vorgesehen, unter Umständen auch zwei.

Eine genannte Stromflussrichtung kann vorteilhaft in radialer Richtung verlaufen, also zwischen einem Mittelpunkt der flächigen Ausdehnung der Heizmittel und einem radialen Außenbereich der Heizmittel.

Wenn die Heizmittel Heizleiter aufweisen als Dickschichtheizleiter, die Felder, Bahnen oder Streifen bilden und die vorteilhaft im Wesentlichen in radialer Richtung, kann ein zentraler Bereich auf mindestens einer Seite der Trägerscheibe frei von diesen Heizleitern sein, vorteilhaft auf beiden Seiten der Trägerscheibe. In diesem zentralen Bereich kann ein vorbeschriebener Anschlussleiter bzw. das elektrisch gut leitfähige Leitermaterial als Leiterbahn eines solchen Anschlussleiters in einer Form vorgesehen sein, die im Vergleich zu den Heizleitern schmal ist bzw. geringe Breite aufweist, dafür aber große Länge. Sie kann in Spiralform oder vorteilhaft in Mäanderform verlaufen und in diesem zentralen Bereich ein Heizelement bilden, wo dies ansonsten mit dem Material der hauptsächlichen Heizleiter aufgrund eines Verlaufs von Leiterquerschnitten nicht möglich wäre. So kann ein ansonsten möglicherweise unbeheizter zentraler Bereich ebenfalls mit geringem Herstellungsaufwand beheizt werden. Auch dieses Leitermaterial kann allgemein in einem Schichtverfahren auf die Trägerscheibe aufgebracht werden, vorteilhaft ebenfalls in einem Dickschichtverfahren, besonders vorteilhaft durch Siebdruck, oder alternativ in einem Sprühverfahren bzw. einem Inkjet-Verfahren. Im letztgenannten Fall ist das Druckmedium vorteilhaft etwas dünnflüssiger.

Für die Heizeinrichtung können in einem weiten Bereich beliebige Flächenleistungsdichten vorgesehen sein, abhängig von der gewünschten Temperatur auf der Kochplatte zur Zubereitung von Nahrungsmitteln. Eine Flächenleistungsdichte kann zwischen 0,5 W/cm² und 15 W/cm² liegen, vorteilhaft zwischen 1,5 W/cm² und 10 W/cm² für die eingangs genannten Nahrungsmittel wie Pfannkuchen oder Fladen. Um Fleisch odgl. direkt auf der Kochplatte grillen zu können, werden relativ hohe Flächenleistungsdichten benötigt, vorteilhaft zwischen 6 W/cm² bzw. 8 W/cm² und 10 W/cm².

Die Heizleiter selbst können aus einem Widerstandsmaterial bestehen, wie es in der Patentanmeldung derselben Anmelderin mit Aktenzeichen DE 102016209012 A1 beschrieben worden ist. Derartiges Widerstandsmaterial eignet sich besonders dann, wenn die Heizleiter bzw. einzelne Teil-Heizleiter davon, die zwischen zwei elektrischen Anschlüssen nur aus diesem Widerstandsmaterial bestehen, eine Breite aufweisen, die die Länge übertrifft, vorzugsweise um mindestens 50 % bis 150 %.

Die eingangs genannte Problematik einer möglichen Durchbiegung einer Trägerscheibe in dem Fall, dass nur auf einer Seite Heizmittel vorgesehen sind, hat ja im Rahmen der Erfindung zum Vorsehen von Heizmitteln auf beiden Seiten der Trägerscheibe geführt. Wenn an der Oberseite der Trägerscheibe durch die Nähe oder ein direktes Anliegen an der Unterseite der Kochplatte mehr Wärme abgenommen wird als an der Unterseite der Trägerscheibe, so kann vorteilhaft vorgesehen sein, dass dort die Flächenleistungsdichte höher ist als an der Unterseite der Trägerscheibe. Die Flächenleistungsdichte kann dort bis zu 10 % größer sein oder sogar bis zu 20 %. Dieser Wert kann bevorzugt empirisch ermittelt werden und sollte so bestimmt werden, dass die Temperaturverhältnisse auf beiden Seiten der Trägerscheibe in etwa gleich sind, um eine einseitige mechanische Belastung der Trägerscheibe zu vermeiden.

In möglicher weiterer Ausgestaltung der Erfindung kann, wenn das Kochgerät bzw. die Trägerscheibe Abmessungen von mehr als 25 cm Länge und/oder Breite aufweist, zur Verringerung von mechanischen Belastungen an den Außenbereichen bzw. am Außenrand aufgrund Wärmeausdehnung vorgesehen sein, dass hier Schlitze in etwa in radialer Richtung eingebracht werden. Diese Schlitze können eine Länge von 1 cm bis 3 cm oder sogar 5 cm aufweisen. Dabei sollte aber vorgesehen sein, dass die Heizleiter nicht derartige Schlitze überdecken.

In möglicher weiterer Ausgestaltung der Erfindung kann ein Temperatursensor an der Heizeinrichtung vorgesehen sein bzw. an dem Kochgerät. Ein solcher Temperatursensor dient vor allem dazu, eine mögliche Übertemperatur bzw. eine zu hohe Temperatur an der Kochplatte zu entdecken zu deren Vermeidung, insbesondere um eine Beschädigung der Kochplatte zu verhindern. Ein Temperatursensor kann vorteilhaft als Thermoelement ausgebildet sein, da diese mechanisch robust und einfach in der Anwendung ausgebildet sind. Des Weiteren kann vorgesehen sein, dass ein Temperatursensor zwischen Heizeinrichtung und Unterseite der Kochplatte angeordnet ist bzw. direkt und unmittelbar an der Unterseite der Kochplatte anliegt. So kann deren Temperatur möglichst gut ermittelt und überwacht werden. Gerade auch mit einem vorgenannten Thermoelement als Temperatursensor ist dies gut möglich, da ein Thermoelement geringe Abmessungen aufweist, insbesondere eine sehr geringe Höhe. Hierfür weisen Thermoelemente auch den großen Vorteil auf, dass sie sehr temperaturbeständig und mechanisch robust sind. Ein Temperatursensor kann samt Anschlussleitung oben auf die Heizeinrichtung aufgelegt sein. Alternativ kann ein Temperatursensor auch aufgedruckt oder bestückt bzw. aufgelötet werden auf den Träger, beispielsweise einen Träger aus oder mit Mikanit. Allgemein kann vorteilhaft ein Abstand des Temperatursensors zu einem Heizleiter größer sein als eine aufaddierte Dicke der Kochplatte und des Trägers, vorteilhaft bestehend aus Mikanit.

In Ausgestaltung der Erfindung kann vorgesehen sein, dass eine flächige Abdeckung oberhalb der Trägerscheibe bzw. oberhalb der Heizmittel an der Oberseite der Trägerscheibe vorgesehen ist. Diese flächige Abdeckung kann direkt und unmittelbar an der Unterseite der Kochplatte anliegen. Sie kann beispielsweise auch zur elektrischen Isolierung dienen, möglicherweise auch als verbesserte thermische Ankopplung.

In Ausgestaltung der Erfindung kann das Kochgerät an seiner Oberseite im Wesentlichen, insbesondere vollständig, von der Kochplatte gebildet sein. Unterhalb der Kochplatte kann es seitlich nach außen und nach unten umgeben sein von einem flachen Gehäuse, welches vor allem die Heizeinrichtung aufnimmt und nach außen abdeckt. Ein solches Gehäuse kann mit einem schmalen Rand auch die Kochplatte umgreifen nach oben. Innen in dem Gehäuse kann eine Wärmedämmung vorgesehen sein neben Anschlüssen und einer Ansteuerung. Eine solche Wärmedämmung sollte die Heizeinrichtung seitlich nach außen und/oder nach unten umgeben. Dadurch soll möglichst viel Wärme nach oben an die Kochplatte abgegeben werden. Des Weiteren soll so verhindert werden, dass das Kochgerät zur Seite bzw. nach unten zu heiß wird, um die Gefahr von Verbrennungen für eine Bedienperson oder für Unterlagen zu verringern.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Schnittdarstellung durch ein erfindungsgemäßes Kochgerät mit Kochplatte und Heizeinrichtung darunter,
- Fig. 2: ein Ausschnitt einer vergrößerten Schnittdarstellung der Heizeinrichtung des Kochgeräts aus Fig. 1 und
- Fig. 3: eine Draufsicht auf die Oberseite der Heizeinrichtung des Kochgeräts aus Fig. 1.

### Detaillierte Beschreibung der Ausführungsbeispiele

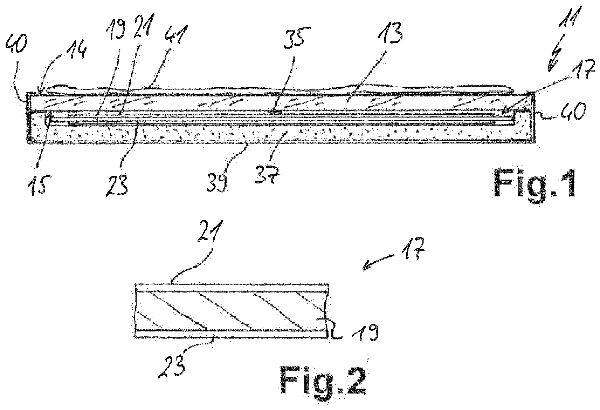

In der Fig. 1 ist im Schnitt ein erfindungsgemäßes Kochgerät 11 dargestellt, welches flache Form aufweist. In Draufsicht kann es rund, insbesondere kreisrund sein. Alternativ kann es in Draufsicht auch rechteckige bzw. quadratische Form aufweisen, insbesondere wegen einer einfacheren und kostengünstigeren Fertigung.

Das Kochgerät 11 weist eine Kochplatte 13 aus Glaskeramik auf. Sie kann eine Dicke von wenigen Millimetern aufweisen, beispielsweise 3 mm bis 5 mm. Zur leichteren Herstellung einer solchen Kochplatte 13 aus Glaskeramik kann eine vorbeschriebene rechteckige bzw. quadratische Grundform für das Kochgerät 11 vorgesehen sein. Eine Oberseite 14 der Kochplatte 13 ist möglichst glatt, so dass darauf beispielsweise eingangs beschriebene Nahrungsmittel wie Fladen 41 direkt zubereitet bzw. gebacken werden können. Eine Unterseite 15 der Kochplatte 13 kann auch glatt sein, alternativ kann sie eine Noppung aufweisen, wie es für derartige Glaskeramikplatten für Kochfeldplatten von Kochfeldern bekannt ist.

Unterhalb der Kochplatte 13 ist eine flache und flächige Heizeinrichtung 17 angeordnet, und zwar vorteilhaft mit geringem Abstand zu der Unterseite 15, wobei sie daran teilweise oder weitgehend anliegt. Oben auf der Heizeinrichtung 17 bzw. auf an der Oberseite der Heizeinrichtung 17 vorgesehenen Heizmitteln 21 liegt ein Temperatursensor 35 auf. Vorteilhaft ist dies ein eingangs beschriebenes Thermoelement mit hier nicht dargestellten Anschlüssen. Diese Anschlüsse sind für einen Fachmann aber leicht auszuführen.

In Ausgestaltung der Erfindung könnte zwischen Heizeinrichtung 17 und Unterseite 15 der Kochplatte 13 noch eine weitere Zwischenschicht vorgesehen sein, beispielsweise elektrisch isolierend. Eine solche Zwischenschicht kann aus beispielsweise einer dünnen Mikanitscheibe bestehen.

Unterhalb der Heizeinrichtung 17 ist eine Wärmedämmung 37 vorgesehen. Sie kann eine Dicke von wenigen Millimetern bis 1 cm oder bis 2 cm aufweisen und vorteilhaft aus faserhaltigem oder faserfreiem Dämmmaterial bestehen, wie es auch für Strahlungsheizeinrichtungen in Kochfeldern bekannt ist. Alternativ kann sie aus Vermiculite bestehen. Die Wärmedämmung 37 ist am Außenrand erkennbar nach oben gezogen und bildet insgesamt eine Art Teller oder flache Schüssel. Die Oberseiten dieser Außenränder liegen vorteilhaft an der Unterseite 15 der Kochplatte 13 an, so dass eine gute Wärmedämmung auch zur Seite hin gegeben ist. Des Weiteren kann so die mechanische Stabilität erreicht werden, die benötigt wird.

Unterhalb der Wärmedämmung 37 wiederum ist ein Gehäuse 39 vorgesehen, vorteilhaft aus Metall, insbesondere Blech. Das Gehäuse 39 übergreift mit einem außen umlaufenden Gehäuserand 40 nicht nur den Rand der Wärmedämmung 37, sondern reicht bis über eine Außenkante der Kochplatte 13 nach oben und liegt mit einem geringen Überstand auf der Oberseite 14 der Kochplatte 13 an. Durch diese Umklammerung kann das gesamte Kochgerät 11 leicht verschlossen werden und zu Reparaturzwecken auch leicht geöffnet werden.

Nicht dargestellt in der Fig. 1 ist ein elektrischer Netzanschluss für die Heizeinrichtung 17 sowie evtl. eine Steuerung, insbesondere ein Ein-/Aus-Schalter sowie möglicherweise eine Leistungseinstellung für die Heizeinrichtung 17. Diese sind für den Fachmann aber leicht zu realisieren und können einen beispielsweise außen an das Gehäuse 39 bzw. den Gehäuserand 40 angesetzten Schalter aufweisen. Dies kann ein sogenannter Energieregler sein, wie er beispielsweise aus der DE 19833983 A1 bekannt ist. Alternativ müsste durch eine bestimmte Aufteilung der Heizmittel an der Heizeinrichtung 17 die Möglichkeit geschaffen werden, diese durch verschiedene Parallelschaltungen und/oder Reihenschaltungen in unterschiedlichen Leistungsstufen einzuschalten. Dann würde der Aufwand aber stark ansteigen.

In der Schnittdarstellung der Fig. 2 ist ein vergrößerter Ausschnitt der Heizeinrichtung 17 dargestellt. Die Trägerscheibe 19 besteht aus dem eingangs erläuterten Mikanit. Besonders vorteilhaft ist dieses Mikanit behandelt, zumindest an seiner Außenseite, um das nachfolgende Aufbringen von Heizmitteln 21 an der Oberseite und Heizmitteln 23 an der Unterseite zu ermöglichen. Es kann aber auch unbehandelt sein. Diese Heizmittel 21 und 23 sind mit Dickschichtverfahren aufgebracht, wie eingangs erläutert. Dies bedeutet, dass es Dickschichtheizleiter sind aus einem geeigneten Material, insbesondere einem zuvor beschriebenen Material. Nicht dargestellt in der Fig. 2, aber leicht vorstellbar, sind elektrische Anschlüsse für die Heizmittel 21 und 23, wie sie nachfolgend etwas näher erläutert werden.

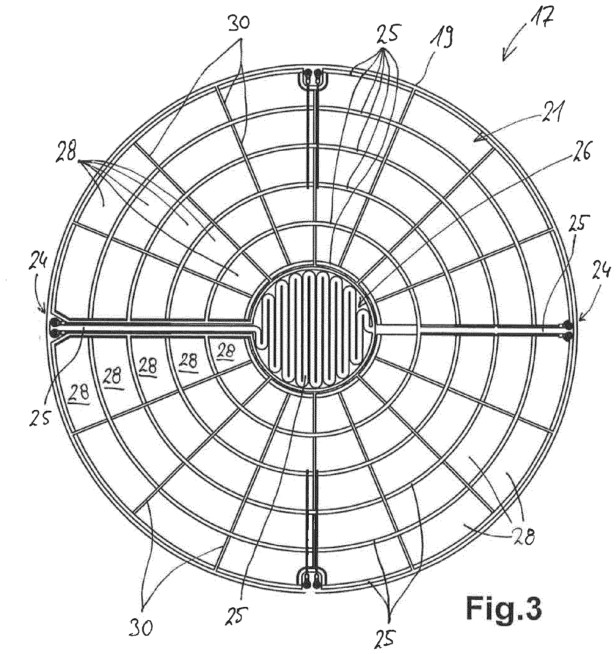

In der Fig. 3 ist eine Draufsicht auf die Heizmittel 21 an der Oberseite der Trägerscheibe 19 der Heizeinrichtung 17 dargestellt. Für die Heizmittel 21 sind an gegenüberliegenden Außenseiten der Trägerscheibe 19 Anschlüsse 24 vorgesehen, hier also zwei Anschlüsse links und rechts. Von diesen Anschlüssen 24 gehen Leiterbahnen 25 aufeinander zu bzw. auf den Mittelbereich zu. Von diesen speziellen Leiterbahnen 25 wiederum gehen weitere Leiterbahnen in Umlaufrichtung ab, insgesamt sechs umlaufende Leiterbahnen 25. Diese umlaufenden Leiterbahnen 25 werden von Heizleitern 28 der Heizmittel 21 überlappt, wobei alle diese Heizleiter 28 Kreisringsegmentform aufweisen mit gleicher Länge in radialer Richtung, nur eben unterschiedlicher Breite in Umfangsrichtung und unterschiedlicher Krümmung. Dies bedeutet, dass die Heizleiter 28 jeweils Kreisringsegmente bilden, die ein Stück oder evtl. sogar vollständig über die in Umfangsrichtung verlaufenden Leiterbahnen 25 überlappen oder von diesen überdeckt werden.

Des Weiteren sind in radialer Richtung verlaufende Trenngräben 30 vorgesehen, über die kein Material der Heizleiter 28 verläuft. Es überlappt auch nur jede zweite Leiterbahn 25 in Umfangsrichtung darüber. Diese Trenngräben 30 beginnen an einem innersten Ring der Leiterbahn 25. Die Leiterbahnen 25 und die Heizleiter 28 können in Dickschichtverfahren hergestellt sein, insbesondere im Siebdruckverfahren hergestellt aus jeweils geeigneten Leiterpasten, die dann eingebrannt werden.

Es ist wichtig, dass der radiale Abstand der kreisförmigen umlaufenden Leiterbahnen 25 jeweils gleich ist. Die Stromflussrichtung verläuft also entlang der radialen Richtung. Hier variiert die Breite der Heizleiter 28 in Richtung quer zur Stromflussrichtung etwas, vor allem bei den radial inneren Heizleitern 28. Dies kann aber entweder durch spezielle Geometrie oder Breite der Trenngräben 30 ausgeglichen werden, alternativ akzeptiert man eine etwas ungleiche Stromdichte und somit Wärmeverteilung.

Die spezielle Verschaltung der Heizleiter 28 mittels der Leiterbahnen 25 ist gut zu ersehen und kann leicht nachvollzogen werden anhand der Fig. 3.

In einem mittleren Bereich der Heizeinrichtung 17 bzw. der Trägerscheibe 19 ist ein zentrales Heizelement 26 vorgesehen. Dies wird gebildet durch einen Abschnitt der Leiterbahn 25 mit mäanderförmigem Verlauf, um die kreisrunde zentrale Fläche möglichst gut auszunutzen. Auch wenn das Material der Leiterbahn 25, wie eingangs beschrieben worden ist, üblicherweise und vorteilhaft so gut elektrisch leitfähig ist, dass es sich eben gut als Leiterbahn eignet bei normaler Länge, kann durch die erkennbare überaus große Länge des zentralen Heizelements 26 auch hier eine Wärmeerzeugung erreicht werden.

Die Heizmittel 23 an der Unterseite der Trägerscheibe 19 sind vorteilhaft ähnlich ausgebildet wie die Heizmittel 21 an der Oberseite gemäß Fig. 3, insbesondere gleichartig ausgebildet. Besonders vorteilhaft ist dort die Anordnung aber etwas verdreht zu derjenigen der Heizmittel 21 an der Oberseite, beispielsweise um 90°. Somit wären deren Anschlüsse jeweils zwischen den Anschlüssen 24 entsprechend Fig. 3. Die kreisringförmigen, in Umfangsrichtung verlaufenden Leiterbahnen 25 können an der Unterseite an genau derselben Stellte vorgesehen sein. Die Trenngräben könnten auch um einen halben Abstand zwischen zwei Trenngräben an der Oberseite versetzt sein, so dass eine Lücke in der Wärmeerzeugung für die Kochplatte 13 vermieden wird. Demzufolge wären die Heizmittel jeweils um etwa 78,75° zueinander verdreht. In ähnlicher Form könnten auch die Heizleiter in radialer Richtung etwas versetzt zueinander sein.

Durch eine im Wesentlichen symmetrische und gleichartige Ausgestaltung der Heizmittel 21 an der Oberseite und der Heizmittel 23 an der Unterseite einschließlich der jeweiligen zentralen Heizelemente 26 kann eine Heizleistung an der Oberseite der Heizeinrichtung 17 und an der Unterseite 17 erreicht werden, die jeweils gleich ist. Sollte jedoch eine etwas unterschiedliche Heizleistung gewünscht sein, insbesondere eine größere Heizleistung für die Heizmittel 21 an der Oberseite der Trägerscheibe 19, um die stärkere Wärmeabgabe nach oben an die Kochplatte 13 zu berücksichtigen, für die sich letztlich an der Heizeinrichtung 17 einstellenden Temperaturverhältnisse, so können die Heizmittel 21 an der Oberseite 5% bis 20% oder sogar 30% mehr Leistung erzeugen. Dann kann eine oben beschriebene Durchbiegung der Heizeinrichtung aufgrund unterschiedlicher Erwärmung an einer der Seiten, insbesondere an der Unterseite, verringert oder ganz vermieden werden. Dies muss aber nicht so sein, es muss im Wesentlichen bauartabhängig gemacht werden.

## Patentansprüche

1. Kochgerät (11) mit einer Kochplatte (13) und einer Heizeinrichtung (17) darunter, wobei:
- die Heizeinrichtung (17) parallel zu der Kochplatte (13) verläuft und zumindest teilweise an deren Unterseite (15) anliegt,
- die Heizeinrichtung (17) eine parallel zu der Kochplatte (13) verlaufende flache Trägerscheibe (19) aufweist,
- an einer Unterseite und an einer Oberseite der Trägerscheibe (19) jeweils Heizmittel (23, 21) angeordnet sind, die jeweils die Trägerscheibe im Wesentlichen bedecken oder überdecken,
- beide Heizmittel (23, 21) jeweils mindestens einen Heizleiter (28) aufweisen, **dadurch gekennzeichnet, dass**
- die Trägerscheibe (19) Mikanit aufweist,
- die Heizmittel (23, 21) Dickschichtheizleiter als Heizleiter (28) aufweisen bzw. in einem Dickschichtverfahren auf die Trägerscheibe (19) aufgebracht sind.

2. Kochgerät nach Anspruch 1, **dadurch gekennzeichnet, dass** die Kochplatte (13) aus einem elektrisch isolierendem Werkstoff besteht, vorzugsweise aus der Gruppe: Hartglas, Glaskeramik, Keramik, Naturstein.

3. Kochgerät nach Anspruch 1 oder 2, **dadurch gekennzeichnet, dass** das Kochgerät (11) eine einzige Kochplatte (13) und/oder eine einzige Heizeinrichtung (17) aufweist.

4. Kochgerät nach einem der vorhergehenden Ansprüche, **dadurch gekennzeichnet, dass** die Kochplatte (13) zur direkten Zubereitung von Nahrungsmitteln darauf ausgebildet ist.

5. Kochgerät nach einem der vorhergehenden Ansprüche, **dadurch gekennzeichnet, dass** die Trägerscheibe (19) im Wesentlichen oder vollständig aus Mikanit besteht, wobei vorzugsweise die Trägerscheibe (19) an ihrer Oberfläche behandelt ist oder eine Oberflächenbeschichtung aufweist um eine glatte und geschlossene Oberfläche zu bilden zur Aufbringung der Heizleiter (28).

6. Kochgerät nach einem der vorhergehenden Ansprüche, **dadurch gekennzeichnet, dass** auf die Trägerscheibe (19) Anschlussleiter (25) aufgebracht sind aus sehr gut elektrisch leitfähigem Leitermaterial und wobei pro Heizmittel zwei elektrische Anschlussfelder (24) vorgesehen sind, die mit den Anschlussleitern (25) verbunden sind, wobei die Heizleiter (28) an ihren beiden durch eine Stromflussrichtung bestimmten gegenüberliegenden Enden an die Anschlussleiter (25) kontaktieren, insbesondere auf diese überlappen bzw. auf diesen aufliegen.

7. Kochgerät nach einem der vorhergehenden Ansprüche, **dadurch gekennzeichnet, dass** ein zentraler Bereich auf mindestens einer Seite der Trägerscheibe (19) frei ist von Heizleitern (28), vorzugsweise auf beiden Seiten der Trägerscheibe, wobei in dem zentralen Bereich ein Anschlussleiter (26) mit einer im Vergleich zu den Heizleitern (28) geringen Breite und großer Länge in Spiralform oder in Mäanderform vorgesehen ist und ein Heizelement bildet.

8. Kochgerät nach einem der vorhergehenden Ansprüche, **dadurch gekennzeichnet, dass** eine Flächenleistungsdichte pro Seite der Heizeinrichtung (17) zwischen 0,5 W/cm² und 15 W/cm² liegt, vorzugsweise zwischen 1,5 W/cm² und 10 W/cm².

9. Kochgerät nach einem der vorhergehenden Ansprüche, **dadurch gekennzeichnet, dass** die Heizmittel (21) an der Oberseite der Trägerscheibe (19) für eine um bis zu 20% höhere elektrische Flächenleistungsdichte ausgebildet sind als die Heizmittel (23) an der Unterseite der Trägerscheibe, vorzugsweise für eine bis zu 10% größere Flächenleistungsdichte.

10. Kochgerät nach einem der vorhergehenden Ansprüche, **dadurch gekennzeichnet, dass** die Trägerscheibe (19) an einem Außenrand Schlitze aufweist mit Erstreckung von diesem Außenrand hin zu einem Mittelbereich oder einem Mittelpunkt der Trägerscheibe.

11. Kochgerät nach einem der vorhergehenden Ansprüche, **gekennzeichnet durch** einen Temperatursensor (35) an der Heizeinrichtung (17), wobei vorzugsweise der Temperatursensor (35) als Thermoelement ausgebildet ist, wobei insbesondere der Temperatursensor zwischen Heizeinrichtung (17) und Unterseite (15) der Kochplatte (13) angeordnet ist bzw. direkt und unmittelbar an der Unterseite (15) der Kochplatte (13) anliegt.

12. Kochgerät nach Anspruch 11, **dadurch gekennzeichnet, dass** ein Abstand des Temperatursensors zu einem Heizleiter (28) größer ist als eine aufaddierte Dicke der Kochplatte (13) und der Trägerscheibe (19).

13. Kochgerät nach einem der vorhergehenden Ansprüche, **dadurch gekennzeichnet, dass** die Heizeinrichtung (17) oberhalb der Trägerscheibe (19) bzw. oberhalb der Heizmittel (21, 23) an der Oberseite der Trägerscheibe eine flächige Abdeckung aufweist, wobei die flächige Abdeckung direkt und unmittelbar an der Unterseite (15) der Kochplatte (13) anliegt.

14. Kochgerät nach einem der vorhergehenden Ansprüche, **dadurch gekennzeichnet, dass** es an seiner Oberseite im Wesentlichen, insbesondere vollständig, von der Kochplatte (13) gebildet ist, wobei es unterhalb der Kochplatte ein die Heizeinrichtung (17) seitlich nach außen und nach unten umgebendes und aufnehmendes flaches Gehäuse (39) aufweist, wobei insbesondere das Gehäuse innen eine die Heizeinrichtung (17) seitlich nach außen und/oder nach unten umgebende Wärmedämmung (37) aufweist.

## Claims

1. Cooking appliance (11) with a cooking plate (13) and with a heating device (17) thereunder, wherein:
- the heating device (17) runs parallel to the cooking plate (13) and bears at least partially against the bottom side (15) of said cooking plate,
- the heating device (17) has a flat carrier disc (19) running parallel to the cooking plate (13),
- on a bottom side and on a top side of the carrier disc (19) there are arranged in each case heating means (23, 21) which in each case substantially cover or shield the carrier disc,
- both heating means (23, 21) have in each case at least one heating conductor (28), **characterized in that**
- the carrier disc (19) has micanite,
- the heating means (23, 21) have thick-film heating conductors as heating conductors (28), or are applied in a thick-film process onto the carrier disc (19).

2. Cooking appliance according to claim 1, **characterized in that** the cooking plate (13) is composed of an electrically insulating material, preferably from the group: hard glass, glass ceramic, ceramic, natural stone.

3. Cooking appliance according to claim 1 or 2, **characterized in that** the cooking appliance (11) has a single cooking plate (13) and/or a single heating device (17).

4. Cooking appliance according to any of the preceding claims, **characterized in that** the cooking plate (13) is designed for the direct preparation of food products thereon.

5. Cooking appliance according to any of the preceding claims, **characterized in that** the carrier disc (19) is composed substantially or entirely of micanite, wherein preferably, the carrier disc (19) is surface-treated or has a surface coating in order to form a smooth and closed surface for the application of the heating conductors (28).

6. Cooking appliance according to any of the preceding claims, **characterized in that** connection conductors (25) are applied to the carrier disc (19), which connection conductors are composed of conductor material with very good electrical conductivity, wherein, for each heating means, two electrical connection panels (24) are provided which are connected to the connection conductors (25), wherein the heating conductors (28), at their two opposite ends defined by a current flow direction, make contact with, in particular overlap or lie on, the connection conductors (25).

7. Cooking appliance according to any of the preceding claims, **characterized in that** a central region on at least one side of the carrier disc (19) is free from heating conductors (28), preferably on both sides of the carrier disc, wherein, in the central region, a connection conductor (26) with a small width and large length in relation to the heating conductors (28) is provided in spiral form or in meandering form and forms a heating element.

8. Cooking appliance according to any of the preceding claims, **characterized in that** a surface power density per side of the heating device (17) lies between 0.5 W/cm² and 15 W/cm², preferably between 1.5 W/cm² and 10 W/cm².

9. Cooking appliance according to any of the preceding claims, **characterized in that** the heating means (21) on the top side of the carrier disc (19) are designed for an electrical surface power density up to 20% higher than the heating means (23) on the bottom side of the carrier disc, preferably for a surface power density which is greater by up to 10%.

10. Cooking appliance according to any of the preceding claims, **characterized in that** the carrier disc (19) has, at an outer edge, slots with an extent from said outer edge toward a central region or a central point of the carrier disc.

11. Cooking appliance according to any of the preceding claims, **characterized by** a temperature sensor (35) on the heating device (17), wherein preferably the temperature sensor (35) is formed as a thermocouple, wherein in particular the temperature sensor is arranged between heating device (17) and bottom side (15) of the cooking plate (13), or bears directly and immediately against the bottom side (15) of the cooking plate (13).

12. Cooking appliance according to claim 11, **characterized in that** a spacing of the temperature sensor to a heating conductor (28) is greater than a combined thickness of the cooking plate (13) and the carrier disc (19).

13. Cooking appliance according to any of the preceding claims, **characterized in that** the heating device (17) has, above the carrier disc (19) or above the heating means (21, 23) on the top side of the carrier disc, an areal cover, wherein the areal cover bears directly and immediately against the bottom side (15) of the cooking plate (13).

14. Cooking appliance according to any of the preceding claims, **characterized in that** said cooking appliance is, at its top side, formed substantially, in particular entirely, by the cooking plate (13), wherein said cooking appliance has, below the cooking plate, a flat housing (39) which surrounds and accommodates the heating device (17) laterally outwardly and downwardly, wherein in particular the housing has, at the inside, a thermal insulation (37) which surrounds the heating device (17) laterally outwardly and/or downwardly.

## Revendications

1. Appareil de cuisson (11) doté d'une plaque de cuisson (13) et d'un dispositif de chauffage (17) en dessous, dans lequel :
- le dispositif de chauffage (17) s'étend parallèlement à la plaque de cuisson (13) et prend appui au moins partiellement à la face inférieure (15) de la plaque de cuisson,
- le dispositif de chauffage (17) présente un disque de support (19) plat s'étendant parallèlement à la plaque de cuisson (13),
- sur une face inférieure et sur une face supérieure du disque de support (19) respectivement des moyens de chauffage (23, 21) sont arrangés, chacun couvrant ou recouvrant le disque de support essentiellement,
- les deux moyens de chauffage (23, 21) respectivement présentent au moins un conducteur chauffant (28),
**caractérisé en ce que**
- le disque de support (19) comporte micanite,
- les moyens de chauffage (23, 21) comportent des conducteurs chauffants en couche épaisse en tant que conducteur chauffant (28) ou sont appliqués sur le disque de support (19) dans un procédé en couches épaisses.

2. Appareil de cuisson selon la revendication 1, **caractérisé en ce que** la plaque de cuisson (13) est composée d'un matériau électriquement isolant, de préférence sélectionné parmi le groupe : verre dur, vitrocéramique, céramique, pierre naturelle.

3. Appareil de cuisson selon la revendication 1 ou 2, **caractérisé en ce que** l'appareil de cuisson (11) présente une seule plaque de cuisson (13) et/ou un seul dispositif de chauffage (17).

4. Appareil de cuisson selon l'une quelconque des revendications précédentes, **caractérisé en ce que** la plaque de cuisson (13) est configurée pour la préparation directe de produits alimentaires au-dessus.

5. Appareil de cuisson selon l'une quelconque des revendications précédentes, **caractérisé en ce que** le disque de support (19) est composé essentiellement ou complètement de micanite, dans lequel de préférence le disque de support (19) a été traité en surface ou présente un revêtement de surface afin de former une surface lisse et fermée pour l'application des conducteurs chauffants (28).

6. Appareil de cuisson selon l'une quelconque des revendications précédentes, **caractérisé en ce que** sur le disque de support (19) sont appliqués des conducteurs de connexion (25) en matériau conducteur de très bonne conductivité électrique et dans lequel deux panneaux de connexion électriques (24) sont prévus par moyen de chauffage, lesdits panneaux reliés avec les conducteurs de connexion (25), dans lequel les conducteurs chauffants (28), sur leurs deux extrémités opposées déterminées par une direction de circulation de courant, contactent les conducteurs de connexion (25), en particulier les chevauchent ou reposent sur lesdits.

7. Appareil de cuisson selon l'une quelconque des revendications précédentes, **caractérisé en ce qu'**une zone centrale sur au moins une face du disque de support (19) est exempt de conducteurs chauffants (28), de préférence sur deux faces du disque de support, dans lequel à la zone centrale est prévu un conducteur de connexion (26) présentant une largeur inférieure et une longueur supérieure en comparaison avec les conducteurs chauffants (28) sous forme spirale ou sous forme de méandre et donne un élément chauffant.

8. Appareil de cuisson selon l'une quelconque des revendications précédentes, **caractérisé en ce qu'**une densité de rendement de surface par côté du dispositif de chauffage (17) est comprise entre 0,5 W/cm² et 15 W/cm², de préférence entre 1,5 W/cm² et 10 W/cm².

9. Appareil de cuisson selon l'une quelconque des revendications précédentes, **caractérisé en ce que** les moyens de chauffage (21) sur la face supérieure du disque de support (19) sont configurés pour une densité de rendement de surface électrique supérieure jusqu'à 20 % de plus que les moyens de chauffage (23) sur la face inférieure du disque de support, de préférence pour une densité de rendement de surface supérieure jusqu'à 10 % de plus.

10. Appareil de cuisson selon l'une quelconque des revendications précédentes, **caractérisé en ce que** le disque de support (19) présente sur un bord extérieur des fentes s'étendant à partir dudit bord extérieur vers une zone centrale ou un point central du disque de support.

11. Appareil de cuisson selon l'une quelconque des revendications précédentes, **caractérisé par** un capteur de température (35) sur le dispositif de chauffage (17), dans lequel de préférence le capteur de température (35) est sous forme de thermocouple, dans lequel en particulier le capteur de température est arrangé entre le dispositif de chauffage (17) et la face inférieure (15) de la plaque de cuisson (13) ou prend appui directement et immédiatement sur la face inférieure (15) de la plaque de cuisson (13).

12. Appareil de cuisson selon la revendication 11, **caractérisé en ce qu'**une distance du capteur de température à un conducteur chauffant (28) est supérieure à une épaisseur additionnée de la plaque de cuisson (13) et le disque de support (19).

13. Appareil de cuisson selon l'une quelconque des revendications précédentes, **caractérisé en ce que** le dispositif de chauffage (17) présente au-dessus du disque de support (19) ou au-dessus des moyens de chauffage (23, 21) sur la face supérieure du disque de support une couverture plate, dans lequel la couverture plate s'appuie directement et immédiatement sur la face inférieure (15) de la plaque de cuisson (13).

14. Appareil de cuisson selon l'une quelconque des revendications précédentes, **caractérisé en ce que** ledit appareil sur sa face supérieure est formé essentiellement, en particulier complètement, par la plaque de cuisson (13), dans lequel ledit appareil présente, au-dessous de la plaque de cuisson, un boîtier (39) plat entourant et recevant le dispositif de chauffage (17) latéralement vers l'extérieur et vers le bas, dans lequel en particulier le boîtier présente, à l'intérieur, une isolation thermique (37) entourant le dispositif de chauffage (17) latéralement vers l'extérieur et/ou vers le bas.
